# EUROPEAN PATENT APPLICATION

(11) **EP 1 903 145 A1**
(43) Date of publication of application: **26.03.2008**
(21) Application number: 07466016.8
(22) Date of filing: 28.06.2007
(51) Int. Cl.: E01C 11/26, E04F 15/18, F24D 3/14

(54) **Modular board for floor heating collector and floor heating collector comprising this board**

(30) Priority: 08.09.2006 CZ 20060563
(71) Applicant: Smarda, Ivo, Brno 620 00 (CZ)
(72) Inventor: Smarda, Ivo, Brno 620 00 (CZ)
(74) Representative: Musil, Dobroslav

(57) **Abstract**

Modular board (1) of the floor heating collector (2), whose upper surface is profiled and profile depressions create a storage space for meander shaped heating body (21) and which is made of material containing granulate of recycled tyre rubber and a polyurethane binding material. Hardness of this material is at least 40 °Sh and the permitted compression strength higher than 0,25 MPa, while the profiled surface is formed by protrusions (12), whose upper surface area is flush and the total upper surface area of all protrusions (12) creates at least 15% of ground plan area of modular board (1).

Collector (2) of floor heating comprising at least one such a modular board (1).

## Description

### Technical field

The invention relates to the modular board of floor heating collector, whose upper surface is profiled and profile depressions create a storage space for meander shaped heating body, next to this, the invention relates to the floor heating collector, which comprises at least one such modular board.

### Background art

At present, the floor heating belongs to wide-spread device for supply of heat into the dwelling, production and other interior spaces, possibly are used for heating of walking areas of exteriors in the spas, saunas and similarly.

The known systems are mostly constructed as heat exchanger formed by a coil or parallel connected line of parallel tubes, which is positioned in a layer of oversite concrete, which is heated by a fluid passing through the exchanger and it radiates warm into the space above it. Such heating systems are costly as to the production and they are also costly to be adapted e.g. into the already completed rooms, etc. Moreover they feature a high heating inertia, which is not advantageous from the point of view of speed in temperature rise after the start of heating.

Other known systems use shaped pads, which on their surface contain grooves or other performed cavities for positioning of exchanger tubes. These pads are produced of materials on basis of expanded polyethylene and in its substance they are only a distance means for laying of tubing, which is after then covered by a carrying layer of concrete and a surface material, which is e.g. ceramic pavement, layer of plastic or wood.

In an economic way the floor heating of rooms with lower loading on the floor may be realised, such as bathrooms. A known solution in these cases is usage of self-adhesive thermo-mats e.g. made of thin reinforced polyethylene foil with sealed coil made of heating electric conductor. The thermo-mats are glued to the tiles of a bathroom, is covered by a layer of putty onto which the new tiles are being laid. An increased height level of a new floor mostly does not matter.

Disadvantage of known solutions of floor heating is that due to technical-economic reasons it cannot be used in case of its temporary usage e.g. in mobile objects like the prefab halls built for a short-term usage, in production halls with variability of exploited spaces, in exterior for attending roads and sidewalks, whose heating should prevent creation of icing or creating of snow cover in winter period, especially in that case if areas heated in this way should be subject to a high specific load.

The goal of the invention is to eliminate the shortcomings of the present state of the art, or to improve them substantially.

### The principle of the invention

The goal of the invention has been reached by a modular board of floor heating collector, whose principle consists in that, it is made of material containing granulate of recycled tyre rubber, hardness of this material is at least 40 °Sh and the permitted compression strength higher than 0,25 MPa, while the profiled surface is formed by protrusions, whose upper surface area is flush and the total upper surface area of all protrusions creates at least 15% of ground plan area of modular board.

The advantage of the designed modular board is creating of a backing-up element for an easy mounting of floor heating body, which moreover by its flexibility positively affects the floor properties, while its height deformation enables to load the floor by great forces.

Further it is advantageous, if the *periphery* of modular board is performed as a profiled border for a mutual circumferential joining of adjacent modular boards.

Mutual joining of modular boards enables to create, as the need may be, a larger continuous area of tightly inter-connected modular boards.

The goal of the invention has also been achieved through the collector of floor heating comprising a modular board according to the invention, whose principle consists in that that in depressions between protrusions of modular board there is positioned a meander shaped heating body, which is formed of tube made of plastic, of copper or its alloy, or is formed of heating electric cable.
It is advantageous, when the space between protrusions and the bottom of modular board, between level of upper plane of its protrusions and the heating body is filled with silicon sand.

Even at a great area load of collector the material and structure of modular board precludes deformation of heating body, at the same time filling with silicon sand improves stability of any covering of modular board.

It is also advantageous if the modular board is covered by an antiskid metal sheet, *pavement,* floating flooring or batten flooring.

Covering of modular board with these materials enables a large variability in usage of the collector from the drive way requiring resistance to especially high loading to the pleasant floor of dwelling space.

The decisive advantage of the solution according to the invention is possibility to ensure the floor heating through an economically advantageous manner using e.g. very cheap energy of heat transfer liquid of cooling systems of energetic devices. At the same time the installation of heating may be set up in a short time without costly building modifications practically anywhere, while the device suits a large sphere of possible usage.

### Description of the drawing

The solution according to the invention is represented in the drawing where the Fig. 1 indicates of independently used modular board, the Fig. 2 of modular board for usage in the middle of multiple collector, the Fig. 3 of a corner modular board of multiple collector, the Fig. 4 and Fig. 5 exemplary alternatives of lockable joints of modular boards of multiple collector, the Fig. 6 a ground plan of sections of complete collector and the Fig. 7 A-A section of complete collector from the Fig. 6.

### Examples of embodiment

The modular board **1** of collector **2** of floor heating according to the invention is performed as a modular part, which is intended for independent usage, or in an assembly of multiple collector of floor heating.

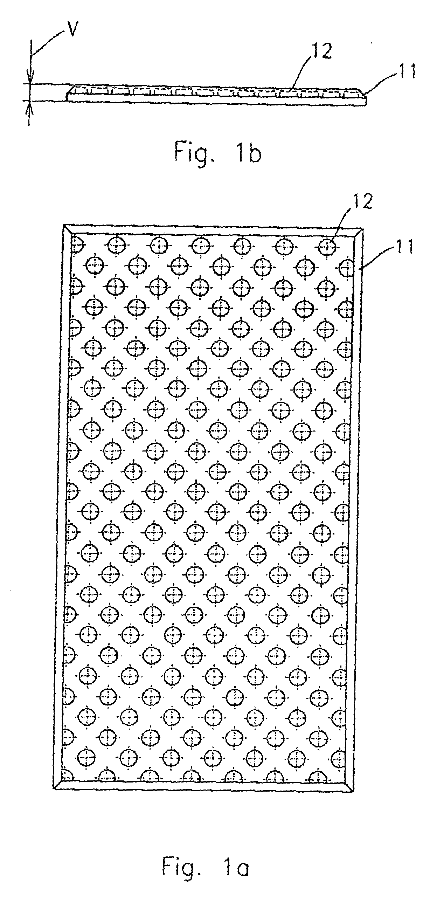

An independent board **1** according to the Fig. 1 has a shape of a tub with heightened borders **11**, the tub surface is covered with diagonally arranged cylindrical protrusions **12** with a planar upper face, while the planar surface of these faces is under the level of upper surface of heightened border **11.** The border **11** has a bevel **111** in the direction to the edge of the board. Surface of all faces of protrusions **12** with advantage amounts to at least 15 % of ground area of the board **1**.

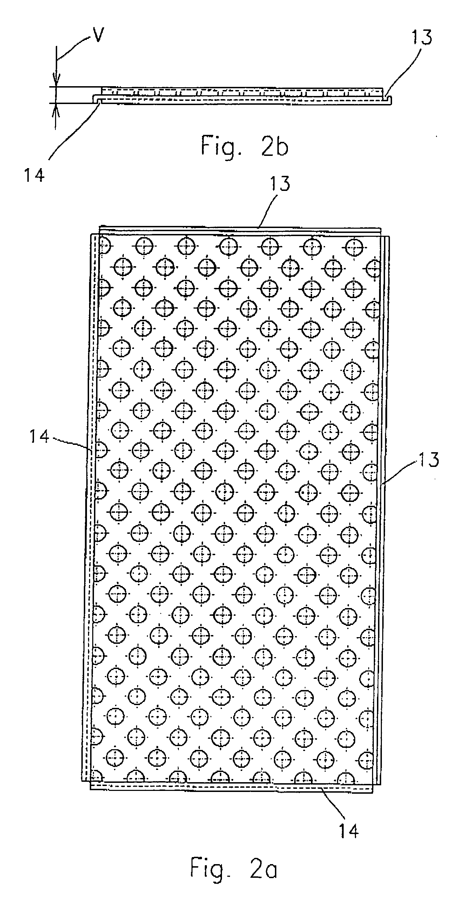

The modular board **1** for usage in the middle of multiple collector **2** according to the Fig. 2 does not have heightened borders, but around its circumference it is provided with means for mutual joining with neighbouring boards **1**.

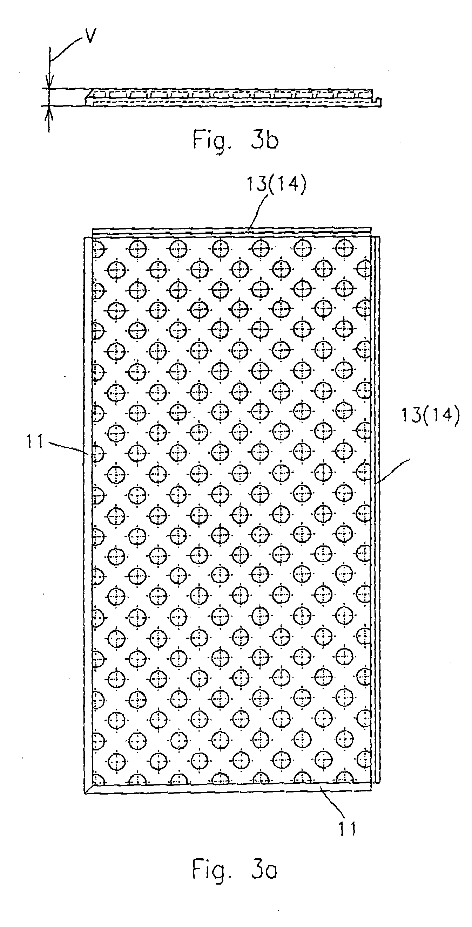

The Fig. 3 represents the corner modular board **1** of multiple collector **2**, whose two neighbouring sides are provided with heightened border **11**, further two sides with respective connecting means, e.g. a longitudinal profile with hooks **13, 14.** The not represented outside modular boards **1** of a multiple collector have always one side provided with a heightened border **11,** the remaining sides are provided with connecting means.

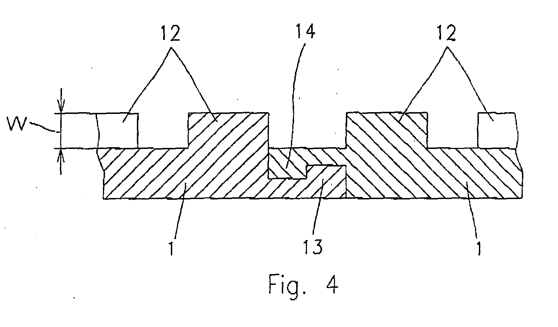

The Fig. 4 represents a vertical section through the point of connection of two boards **1**, whose connecting means is performed alongside the circumference arranged profile of a shape of lower hook **13** at one board **1** and upper hook **14** at second board **1**. Two neighbouring sides of each board **1** are then provided with lower hook **13** and further two neighbouring sides with upper hook **14**.

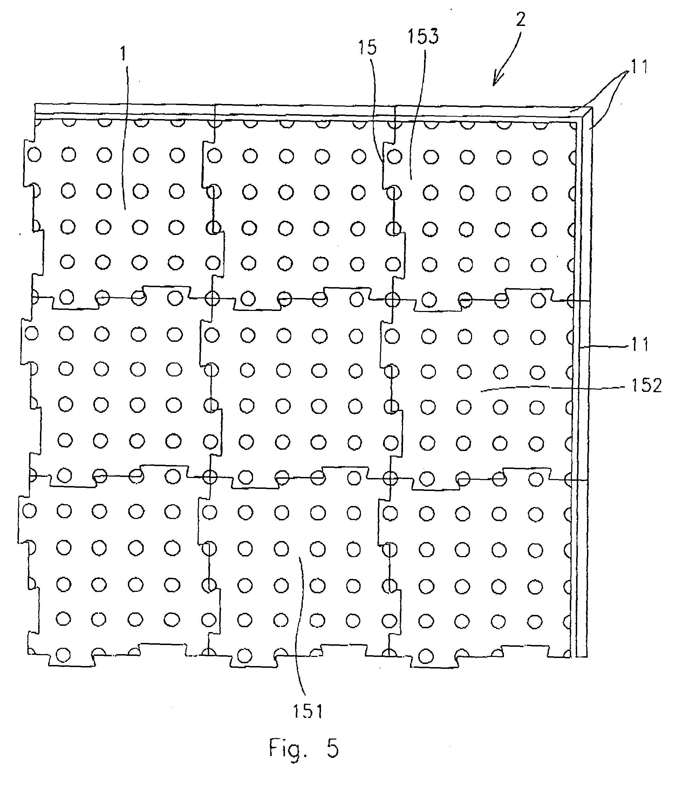

The Fig. 5 represents in ground plan another alternative solution of joining the square modular boards **1** by means of a dovetail profile **15.** This solution at the given ground plan contour of patterns enables to reduce an assortment of produced boards **1** to three types only, namely the centre type **151** without border **11**, the outside type **152** with border **11** on one side, and the corner type **153** with borders **11** on two neighbouring sides. The same corner type **153** of modular board **1** may be used in this case in all corners of multiple collector **2.** It is obvious that joining may be solved in another not illustrated manner, e.g. with cylindrical protrusions in one board **1** and corresponding openings in the second board **1** etc.

Material of the board **1** is elastomer produced of granulate of recycled tyre rubber bonded under heat and increased pressure using polyurethane binding material. Hardness of exemplary used material is 48 °Sh, according to the purpose of usage and expected load of collector a suitable range of hardness is 40 to 70 °Sh. Lower hardness results in greater deformation of loaded board **1**, which is suitable for walking floor surfaces, for higher loading of the board **1** the materials in upper limit of hardness range may be suitable. An important physical property is a permissible compression strength of material, which is at least 0,25 MPa. Material of exemplary execution of modular board **1** has a compression strength at a deformation of 20 % 0,5 MPa, which represents permissible load of surface of 1 m² by a force of about 70 kN.

In exemplary embodiment according to the invention the ground plan dimension of modular board **1** is 2-times 1 m, the height is **V** = 50 mm, the depth **H** = 30 mm and the height of protrusions **VV** = 20 mm. It is obvious that the modular boards **1** may be also of other dimensions, possibly of another shape with respect to arrangement of area, which should be covered with floor heating. For example for a circular area the individual modular boards may have a shape of a circular sector.

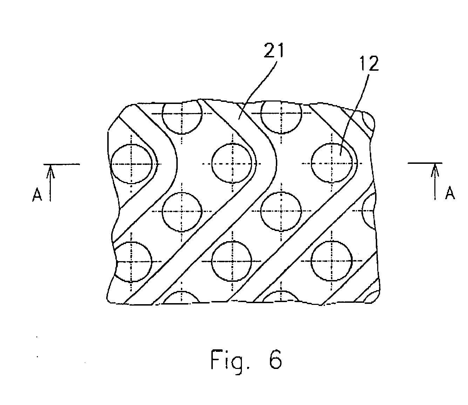

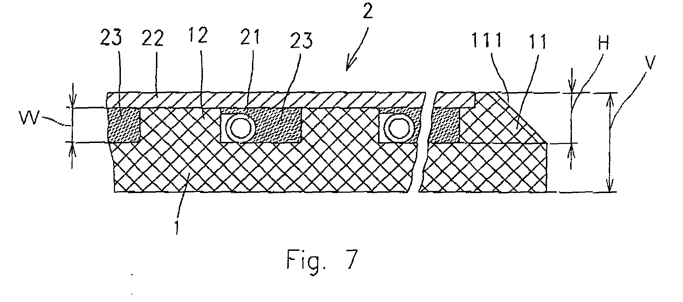

The Fig. 6 represents schematic ground plan of collector **2** of floor heating according to the invention, which comprises at least one modular board **1.** The Fig. 7 represents A-A section through the collector **2** from the Fig. 6. According to the first alternative in depressions between its protrusions **12** there is mounted the heating body **21** performed as a meander arranged tube exchanger. Sequence of the tubes may be in series, possibly in combination of parallel connected series parts. Preferably the tubes are made of plastic, which is cheap and may be easily formed and safely connected. According to an alternative embodiment the tubes are produced of copper or alloys of copper. This solution features a very good workability, service life, heat conductivity, but also a higher price. Outer diameter of the used pipeline of heating body **21** in exemplary embodiments is 16 mm, which with respect to the height of 20 mm of protrusions **12** precludes damage of pipeline due to deformation of modular board at loading.

According to another alternative of embodiment of invention the heating body **21** is formed of a heating electric cable, which is also arranged in meander manner in depressions between the protrusions **12** of modular board **1**. This solution is advantageous from the point of view of mobility of collectors **2** used independently and temporarily, e.g. as a walking pavement at the production machines in insufficiently heated halls, etc.

The space between the planar faces of protrusions **12** and the upper edge of border **11** given in the exemplary embodiment by a height of 10 mm serves to position the covering **22** of heating body **21**, that creates the carrying floor.

Exemplary solutions according to the invention assume in the first alternative as covering **22** to use an antiskid metal sheet of a thickness of 3 to 5 mm, which upon positioning on the protrusions **12** of modular board **1** endures high loads caused e.g. by a riding of a fork lifter, etc. Driving in onto the collector is made easier by a bevelled edge of the border **11**, possible height difference of edge of the border **11** and inserted covering **22** causes only a flexible deformation of border **11** upon driving in of the vehicle.

In another alternative as a covering **22** the pavement is used, which is suitable for some inner production premises, possibly for outdoor sidewalks or driveways.

For dwelling and similar rooms e.g. in temporary constructions another alternative of covering **22** is batten flooring, possibly floating flooring.

According to another alternative of invention the space between the protrusions **12** and bottom of modular board **1,** between level of upper plane of its protrusions **12** and the heating body **21** is filled with dry fine silicon sand **23**. By this the stability of covering **22** is improved also at greater deformations of the modular board **1** itself caused by a greater area load of collector **2.** It is obvious that to the same purpose it is possible to use even another loose material.

The collector **2** of floor heating with advantage is transported to the place of installation in disassembled status, where it is possible to manipulate quite easy with the modular boards **1** themselves and to assemble of them the required shape and size of area. After positioning and joining of modular boards **1** the heating bodies **21** are inserted into them and mutually connected and possibly the inner space of modular board **1** is filled with silicon sand **23** or other suitable loose material. Surface of individual boards is covered by covering **22**.

The advantage of the collector **2** of floor heating containing the modular board **1** according to the invention is possibility of variable shape and size of area provided with floor heating, mobility of the device, which may be in a non-costly way transferred and modified in a new place of application. In production halls e.g. at the machines there may be positioned individual collectors connected to the backbone system of hot-water heating or to electric distribution. The distribution backbone consists in case of a hot-water system of a row of connected longitudinal bodies. The body has a cross section of antiparalellogram for the purpose of easy running over. The body is produced of material of modular board, inside the body there are parallel side by side mounted the inlet and outlet pipelines, in the vicinity of ends of the body there are arranged means for series connection of individual bodies, possibly for tapping of the pipeline to collectors of floor heating.

Economically very advantageous may be usage of collectors for heating of sidewalks and driveways in sites of premises, at whose disposal there are large cooling circuits of water, like e.g. all thermal power plants or compressor stations. In such places it is possible to have a very cheap and comfortable servicing of communications in a winter period without necessity to clear the snow, possibly an icy ground, hence ecological undesired usage of scattering containing salt.

Of course, the designed collectors of floor heating may be used in combination with a solar collector, which may supply with energy the low-temperature tempering systems practically through the whole year.

### List of referential markings

- 1: modular board (of floor heating)
- 11: border
- 12: protrusion
- 13: lower hook
- 14: upper hook
- 15: dovetail profile
- 151: centre type of modular board
- 152: outside type of modular board
- 153: corner type of modular board
- 2: collector (of floor heating)
- 21: heating body
- 22: covering
- 23: silicon sand
- H: depth (of modular board)
- V: height (of modular board)
- VV: height of protrusions

## Claims

1. Modular board of the floor heating collector, whose upper surface is profiled and profile depressions create a storage space for meander shaped heating body, **characterised by** that it is made of material containing granulate of recycled tyre rubber and a polyurethane binding material, hardness of this material is at least 40 °Sh and the permitted compression strength higher than 0,25 MPa, while the profiled surface is formed by protrusions (12), whose upper surface area is flush and the total upper surface area of all protrusions (12) creates at least 15% of ground plan area of modular board (1).

2. Modular board of the floor heating collector according to the claim 1, **characterised by** that its *periphery* is performed as a profiled border for a mutual circumferential joining of adjacent modular boards (1).

3. Collector of floor heating comprising at least one modular board according to the claim 1 or 2, **characterised by** that in depressions between protrusions (12) of modular board (1) there is positioned a meander shaped heating body (21), which is formed of a tube made of plastic.

4. Collector of floor heating comprising at least one modular board according to the claim 1 or 2, **characterised by** that in depressions between protrusions (12) of modular board (1) there is positioned a meander shaped heating body (21), which is formed of a tube made of copper or its alloy.

5. Collector of floor heating comprising at least one modular board according to the claim 1 or 2, **characterised by** that in depressions between protrusions (12) of modular board (1) there is positioned a meander shaped heating body (21) which is formed of a heating electric cable.

6. Collector of floor heating according to any of the claims 3 to 5, **characterised by** that the space between protrusions (12) and the bottom of modular board (1), between level of upper plane of its protrusions (12) and the heating body (21) is filled with silicon sand (23).

7. Collector of floor heating according to any of the claims 3 to 6, **characterised by** that the modular board (1) is covered by an antiskid metal sheet.

8. Collector of floor heating according to any of the claims 3 to 6, **characterised by** that the modular board (1) is covered by *pavement.*

9. Collector of floor heating according to any of the claims 3 to 6, **characterised by** that the modular board (1) is covered by floating flooring.

10. Collector of floor heating according to any of the claims 3 to 6, **characterised by** that the modular board (1) is covered by batten flooring.
